# EUROPÄISCHE PATENTSCHRIFT

(11) **EP 1 789 885 B1**
(45) Veröffentlichungstag und Bekanntmachung des Hinweises auf die Patenterteilung: **27.04.2011**
(21) Anmeldenummer: 05782145.6
(22) Anmeldetag: 07.09.2005
(51) Int. Cl.: G06F 13/40, H04L 12/407, H04L 12/43

(54) **VERFAHREN ZUM ERSTELLEN VON KOMMUNIKATIONSPLÄNEN FÜR EIN VERTEILTES ECHTZEIT-COMPUTERSYSTEM**
METHOD FOR ESTABLISHING COMMUNICATION PLANS FOR A DISTRIBUTED REAL-TIME COMPUTER SYSTEM
PROCEDE D'ETABLISSEMENT DE PLANS DE COMMUNICATION POUR UN SYSTEME INFORMATIQUE EN TEMPS REEL PARTAGE

(30) Priorität: 15.09.2004 AT 15542004
(43) Veröffentlichungstag der Anmeldung: 30.05.2007
(73) Patentinhaber: TTTech Computertechnik AG, 1040 Wien (AT)
(72) Erfinder: WEICH, Carsten, A-1230 Wien (AT); TANZER, Christian, A-1130 Wien (AT); KÖNIGHOFER, Gerhard, 2620 Neunkirchen (AT); GLÜCK, Martin, A-2244 Spannberg (AT)
(74) Vertreter: Patentanwaltskanzlei Matschnig & Forsthuber OG
(86) Internationale Anmeldenummer: PCT/AT2005/000357
(87) Internationale Veröffentlichungsnummer: WO 2006/029426

(56) Entgegenhaltungen:
- EP-A- 1 355 460
- DE-A1- 10 211 517

## Beschreibung

Die Erfindung betrifft ein Verfahren zum Erstellen von Kommunikationsplänen für ein verteiltes Echtzeit-Computersystem mit Knotenrechner.

Kommunikationspläne sind erforderlich, um eine zeitgesteuerte Kommunikation innerhalb einer verteilten, zeitgesteuerten Echtzeit-Computerarchitektur, im folgenden auch kurz "Cluster" genannt, eindeutig festzulegen.

Verteilte, zeitgesteuerte Echtzeitsysteme können unter anderem in Fahrzeugen, wie Autos oder Flugzeugen, Verwendung finden. Beschrieben sind derartige Systeme beispielsweise in den folgenden Dokumenten:
US 5 694 542 A
US 4 866 606 A
EP 1 222 542 B1
US 5 887143 A
WO 02/099643 A3
WO 2004/023302

Bus Protokolle für verteilte, zeitgesteuerte Echtzeitsysteme sind weiters beschrieben in:
TTP:TTP/C Protocol Specification, verfügbar über http://www.tttech.com
FlexRay: FlexRay Communication System Protocol Specification, verfügbar über http://www.flexray.com
TTCAN (time-triggered communication on CAN): ISO 11898-1

Nähere Angaben zu Kommunikationsplänen sind auch zu finden in:
Kopetz, H. (1997). Real-Time Systems, Design Principles for Distriguted Embedded Applications; ISBN: 0-7923-9894-7. Boston. Kluwer Academic Publishers.
Kopetz, H., Bauer, G. The Time Triggered Architecture, Proceedings of the IEEE Vol. 91, No.1, Jan 2003, pp. 112 - 126

In Hinblick auf die verwendete Terminologie werden zunächst die nachstehenden Kurzdefinitionen gegeben.

| | |
|---|---|
| Kommunikationsplan | Enthält die Summe der Parameter, die zur eindeutigen Festlegung einer zeitgesteuerten Kommunikation not-wendig sind. Dies sind mindestens: |
| | |
| | • Größe der Slots, Zuordnung der Senderknoten für alle Slots |
| | |
| | • Anzahl der Kommunikationsrunden |
| | |
| | • Bitposition und Länge aller Einzelnachrichten innerhalb eines Slots |
| | |
| | • Protokollabhängige zusätzliche Parameter, wie z. B. Länge der Wartezeiten zwischen den Slots |
| | |
| Cluster-Kommunikationsplan | Bei diesem sind die Parameter vollständig, somit für alle Knoten komplett vorhanden - im Gegensatz zum Knoten-Kommunikationsplan. |
| | |
| Knoten-Kommunikationsplan | Darunter wird jene Teilmenge von Parametern eines Kommunikationsplanes verstanden, die ausreichend ist, um einen Knoten kommunikationsfähig zu gestalten. |
| | |
| Slot | Ein Abschnitt im Zeitbereich in einer zeitgesteuerten Kommunikation, die eindeutig einem bestimmten Knoten zugeordnet ist. Nur dieser Knoten darf innerhalb des Abschnittes senden. |
| | |
| Cluster | Kurzbezeichnung für ein verteiltes, zeitgesteuertes und aus Knoten und dem Kommunikationssystem bestehendes Echtzeitsystem, über das die Knoten Nachrichten entsprechend den Kommunikationsplänen austauschen können. |
| Knoten | Integrierter, elektronischer Rechner. Ein Knoten kommuniziert mit anderen Knoten im selben Cluster über einen zeitgesteuerten Kommunikationskanal. |
| | |
| Raster | Dieser Begriff wird im Rahmen der Erfindung für einen Meta-Kommunikationsplan verwendet. Es handelt sich um die Summe der Parameter, die notwendig sind, um verschiedene Kommunikationspläne im Sinne der Erfindung miteinander kompatibel zu halten. |
| | |
| Gleichteil | Mit diesem Begriff wird im Rahmen der Erfindung ein Knoten bezeichnet, der in unterschiedlichen Clustern unverändert mit derselben Software und demselben Knoten-Kommunikationsplan eingesetzt werden kann. |
| | |
| Clustervariante | Eine Clustervariante ist eine Variante eines anderen Clusters, wenn die Clustervariante und das ursprüngliche Cluster mindestens einen gemeinsam verwendeten Knotentyp (ein Gleichteil) besitzen. |

Wenn beispielsweise Cluster in einem Automobil eingesetzt werden, so betreffen die einzelnen Knoten unterschiedliche Detailanwendungen, wie z. B. die Motorsteuerung, die Steuerung einer Klimaanlage, die Steuerung von Sitzverstellungen, die Abgasreinigung, etc. Wenn Ausstattungsvarianten eines Fahrzeuges angeboten werden sollen, so ist es oft erforderlich, Clustervarianten anzuwenden, was aber auch zu Varianten in dem Kommunikationsplan führt. Daher müssen an sich gleiche Knotenrechner in unterschiedlichen Varianten auch unterschiedliche Kommunikationspläne haben und unterscheiden sich dann doch von einander. Bei der Produktion von Clustervarianten in großen Serien führt dies zu unerwünschten Komplikationen und Kosten, denn entweder müssen Kommunikationspläne in die Knotenrechner nachgeladen werden können oder es muss eine Knotenvariante für jede Clustervariante bereitgestellt werden. Das Nachladen der Kommunikationspläne muss üblicherweise während der Produktion am Band geschehen und kostet Zeit und führt zu logistischen Problemen. Die Bereitstellung und Lagerhaltung von eigenen Knotenvarianten für jede Clustervariante ist naturgemäß gleichfalls kostspielig.

Es soll daher versucht werden, Gleichteile einzusetzen, die in unterschiedlichen Clustervarianten unverändert eingesetzt werden können. Im Prinzip können nämlich Knotenrechner auch dann kommunizieren, wenn ihre Kommunikationspläne das konkrete Cluster nicht exakt wiedergeben. Solange alle Kommunikationspartner des Knotens Nachrichten entsprechend den Plänen des Knotens senden und empfangen, kann die Kommunikation funktionieren.

Aus dem Dokument DE 10211517 A1 gehen ein Verfahren und eine Vorrichtung zur Erstellung eines generellen Zeitplans für die Übermittlung von Nachrichten auf einem Bussystem hervor, wobei ein genetischer Algorithmus erstellt.

Eine Aufgabe der Erfindung liegt nun darin, ein Verfahren für die Erstellung von Kommunikationsplänen für Cluster anzugeben, welche die Verwendung von Gleichteilen ermöglicht bzw. die Kompatibilität mit dem Bus-Zeitplan für eine Kommunikation in unterschiedlichen Clustern zu gewährleisten.

Diese Aufgabe wird mit einem Verfahren entsprechend Patentanspruch 1 gelöst.

Ein besonderer Vorteil des erfindungsgemäßen Verfahrens liegt darin, dass einwandfreie Kommunikationspläne rasch und konstruktiv, ohne "Probieren" erstellt werden können.

Um nämlich Clustervarianten mit Gleichteilen zu ermöglichen, müssen derzeit Master-Kommunikationspläne erstellt werden, in denen durch Nachdenken und geschicktes Verteilen von Slots und Nachrichten dafür gesorgt wird, dass Knoten in mehreren Varianten eingesetzt werden können. Diese Arbeit ist aber fehleranfälliges Herumprobieren mit Parametern und man kann sich nie sicher sein, dass jede Kombination auch funktioniert. Das erfindungsgemäße Verfahren hingegen garantiert durch Konstruktion kompatibler Kommunikationspläne das Zusammenspiel von Knoten in allen Clustervarianten.

Der Gegenstand der Erfindung unterscheidet sich von dem aus der DE 102 11 517 A1 bekannt gewordenen Verfahren zur Erstellung eines Zeitplans dadurch, dass es sog. "Gleichteile" gibt, d. h. Knoten, die in unterschiedlichen Clustern unverändert mit derselben Software und demselben Knoten-Zeitplan eingesetzt werden können, und diese Knoten-Zeitpläne von dem generellen Zeitplan des Bussystems abgeleitet werden. Dadurch wird die Anzahl von Knotenvarianten für verschiede Cluster reduziert.

In vielen Fällen wird das Verfahren vereinfacht, wenn das Raster aus einem bereits bestehenden Kommunikationsplan extrahiert wird.

Das Verfahren nach der Erfindung bringt besondere Sicherheit und Zeitgewinn, wenn Knoten-Kommunikationspläne für zwei oder mehr Gleichteiltypen des Clusters erstellt werden

Gleiches gilt für eine Ausgestaltung der Erfindung, bei welcher zumindest zwei Varianten von Cluster-Kommunikationsplänen erstellt werden.

Besonders vorteilhaft, weil in der Folge kostensparend ist es, wenn Kommunikationspläne für Cluster von Knotenrechnern in Kraftfahrzeugen erstellt werden.

Gegenstand der Erfindung sind weiters ein Cluster-Kommunikationsplan, welcher nach einem Verfahren nach einem der Ansprüche 1 bis 5 erstellt wurde, ein computerlesbarer Datenträger, enthaltend ein Computerprogramm zur Durchführung des Verfahrens nach einem der Ansprüche 1 bis 5 sowie ein computerlesbarer Datenträger, enthaltend einen Kommunikationsplan, der mit einem erfindungsgemäßen Verfahren erstellt worden ist.

Die Erfindung ist im Folgenden anhand einer beispielsweisen Ausführungsform näher erläutert, die in der Zeichnung veranschaulicht ist. In dieser zeigen:
Fig. 1 eine schematische Darstellung eines Clusters mit fünf Knotenrechnern,
Fig. 2 das vereinfachte Schema eines Rasters, bestehend aus vier Runden zu je fünf Slots,
Fig. 3 einen von dem Raster nach Fig. 1 abgeleiteten Kommunikationsplan eines Gleichteils,
Fig. 4 eine erste Variante eines Cluster-Kommunikationsplans, in dem der Kommunikationsplan des Gleichteils gemäß Fig. 2 integriert ist,
Fig. 5 eine andere Variante eines Cluster-Kommunikationsplans, in dem ebenfalls der Kommunikationsplan des Gleichteils gemäß Fig. 2 integriert ist,
Fig. 6 das Schema eines Rasters analog von Fig. 2, jedoch mit einer anderen Slotteilung.
Fig. 7 einen von dem Raster nach Fig. 6 abgeleiteten Kommunikationsplan für einen ersten Gleichteiltyp,
Fig. 8 einen von dem Raster nach Fig. 6 abgeleiteten Kommunikationsplan für einen zweiten Gleichteiltyp,
Fig. 9 eine erste Variante eines Cluster-Kommunikationsplans, in dem die Kommunikationspläne beider Gleichteiltypen gemäß Fig. 7. und 8 integriert sind und
Fig. 10 eine zweite Variante eines Cluster-Kommunikationsplans, in dem gleichfalls die beiden Kommunikationspläne nach Fig. 7 und 8 integriert sind.

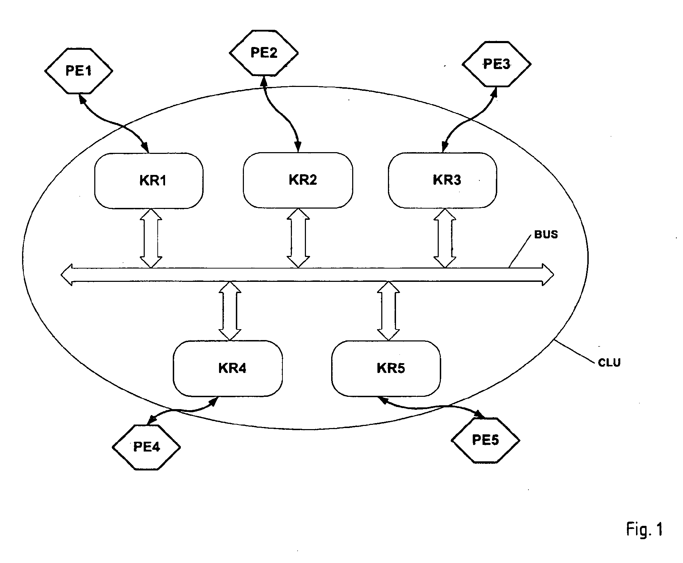

Unter Bezugnahme auf Fig. 1 wird zunächst ein Beispiel für ein verteiltes Echtzeit-Computersystem mit Knotenrechnern, kurz "Cluster", gezeigt. Das System enthält beispielsweise fünf Knotenrechner KR1 ... KR5, die über einen Bus BUS miteinander kommunizieren können. Die Knotenrechner KR1... KR5 stehen ihrerseits mit Peripheriegeräten PE1 ... PE5 in Verbindung.

Der Knotenrechner KR1 kann die Steuerung einer Klimaanlage sein und die Peripherie PE1 die Klimaanlage als solche beinhalten, z. B. einen Klimakompressor, Temperatursensoren, Luftfeuchtigkeitsensoren, etc.

Der Knotenrechner KR2 kann beispielsweise ein Türsteuergerät in einem Kraftfahrzeug sein und bei der Peripherie PE2 kann es sich um Türkomponenten, z. B. Schalter in der Tür, Außenspiegel, Fensterhebermotor, etc. handeln.

Der Knotenrechner KR3 kann ein Sitzsteuergerät in dem betrachteten Kraftfahrzeug sein und die Peripherie PE3 kann Sitzkomponenten umfassen, z. B. Schalter in dem Sitz, Verstellmotoren, etc.

Bei dem Knotenrechner KR4 kann es sich um die Klimaklappensteuerung handeln und die Peripherie PE4 möge Lüftungsklappen beinhalten, z. B. Lüftermotoren, die Klappenverstellung, etc.

Der Knotenrechner KR5 und die zugehörige Peripherie PE5 werden hier nicht behandelt, sie können als "Reserve" angesehen werden.

Das verteilte Echtzeit-Computersystem ist mit CLU in Fig. 1 bezeichnet.

Um bei dem Beispiel von Kraftfahrzeugen zu bleiben, gibt es Türen, Sitze und Klimaanlagen in unterschiedlichen Ausführungen. In Luxusausführungen kommuniziert beispielsweise die Türe mit Sitz und Klimaanlage, eine Memofunktion verstellt Außenspiegel, Tür und Sitz und die gewünschte Innenraumtemperatur. Bei einfacheren Ausführungen eines Modells liegen diese Möglichkeiten nicht vor, jedoch kommuniziert die Klimasteuerung immer mit der Klimaklappensteuerung. Aus verschiedenen Varianten, z. B. zwei Arten von Türen, drei Arten von Sitzen, zwei Typen von Klimaanlagen und so fort, ergeben sich etliche Kombinationen, im gezeigten Beispiel zwölf Variationen. Wird jede Clustervariante als Steuergerätvariante geführt, so müsste man in diesem Beispiel zwölf Türsteuergerätvarianten bereitstellen statt lediglich zwei mit unterschiedlichen Funktionen. Man versucht daher Gleichteile einzusetzen, die bei den verschiedenen Modellen des betrachteten Kraftfahrzeugs unverändert eingesetzt werden können.

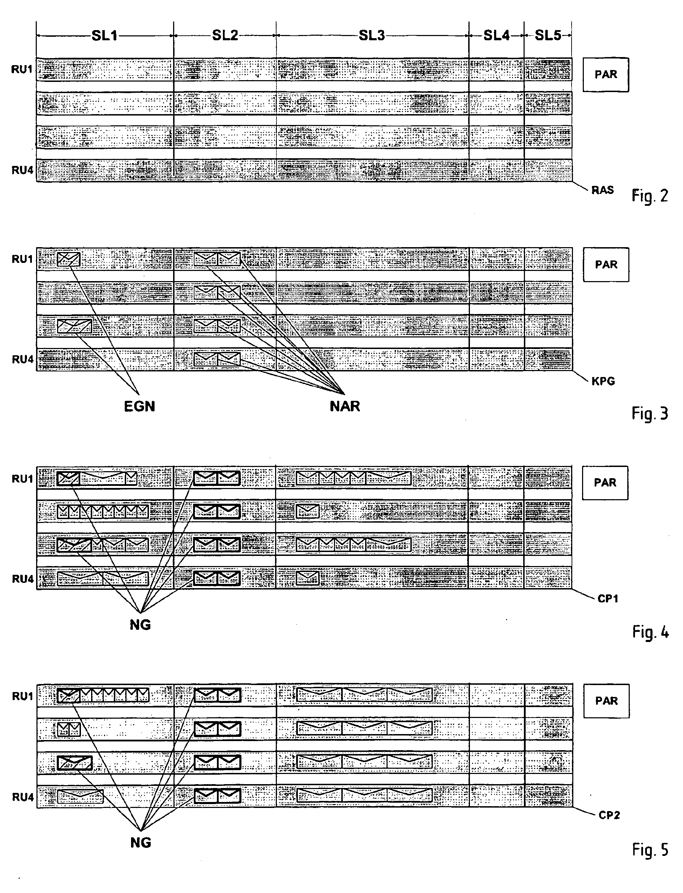

In den Fig. 2 bis 5 ist ein erstes Beispiel für ein erfindungsgemäßes Verfahren zum Erstellen von Kommunikationsplänen dargestellt. Zunächst wird in einem ersten Schritt (Fig. 2) ein Raster RAS erstellt. Ein solches Raster kann neu entwickelt oder aus einem bestehenden Kommunikationsplan heraus erzeugt, sozusagen "extrahiert" werden. Durch das Raster ist hier definiert, dass der Kommunikationsplan fünf Sender mit Sendeslotlängen SL1, SL2, SL3, SL4 und SL5 beinhaltet. Das Raster legt weiters fest, dass der Kommunikationsplan aus vier Runden RU1 ... RU4 besteht. Darüber hinaus werden weitere Parameter (Zusatzparameter) festgelegt, die in Form eines Kästchens PAR angedeutet sind. Diese Parameter PAR beinhalten die Übertragungsgeschwindigkeit, das physikalische Übertragungsverfahren (Übertragungsmedium, Codierung) und andere, von dem jeweiligen Übertragungsprotokoll abhängige Parameter, wie z. B. Wartezeiten zwischen Slots und/oder Runden.

In einem nächsten Schritt wird von dem Raster ein Knoten-Kommunikationsplan KPG für alle als Gleichteile geplante Knoten, im vorliegenden Beispiel den Knotenrechner KR2, von dem Raster RAS abgeleitet und es werden dabei sämtliche Parameter des Rasters übernommen und knotenspezifische Parameter hinzugefügt. Fig. 3 zeigt die Basis eines solchen Knoten-Kommunikationsplans KPG, der festlegt, dass der Knoten in einem bestimmten Slot SL2 sendet, wobei die gesendeten Nachrichten NAR mit ihrer Position relativ zum Zyklus bzw. zu der Runde sowie mit ihrer Bitposition im Slot festgelegt sind. Der Knoten-Kommunikationsplan KPG legt weiters fest, dass der Knoten bestimmte Eingangsnachrichten erwartet, nämlich im vorliegenden Fall zwei Nachrichten EGN im Slot SL1 in den Runden RU1 bzw. RU3.

Ein Knoten mit diesem Knoten-Kommunikationsplan KPG kann nun in unterschiedlichen Clustern eingesetzt werden, die jeweils von demselben Raster abgeleitet sein müssen. In den Fig. 4 und 5 sind zwei unterschiedliche Clustervarianten gezeigt, in welchen der Knoten KR2 als Gleichteil eingesetzt wird. Da nun die Rasterparameter sowohl im Knoten-Kommunikationsplan KPG als auch im Cluster-Kommunikationsplan CP1 bzw. CP2 gleich sind, kann die Kommunikation prinzipiell ablaufen. Die Übernahme des Knoten-Kommunikationsplans KPG in beide Kommunikationspläne CP1, CP2 der Clustervarianten stellt sicher, dass auch alle Nachrichten, die das Gleichteil verlangt, in jeder Variante an der richtigen Position vorhanden sind.

Die Fig. 2 bis 5 zeigen die wesentlichen Merkmale des Kommunikationsplanes, wobei die zusätzlichen, bereits erwähnten Parameter in den Fig. 3 bis 5 ganz allgemein gleichfalls mit PAR bezeichnet und als Kästchen dargestellt sind. Ein- und ausgehende Nachrichten der Gleichteile sind mit NG bezeichnet.

Was die Parameter des Rasters RAS betrifft, so sind sie eine Teilmenge der Parameter eines Cluster-Kommunikationsplans CP1, CP2. Diese Rasterparameter umfassen alle Parameter, die notwenig sind, um eine zeitgesteuerte Kommunikation zwischen den Knoten KR 1 ... KR 5 des Clusters prinzipiell, d. h. im Sinne eines Empfangens von Nachrichten, zu ermöglichen. Diese Parameter sind mindestens:
- Parameter des Physical Layers entsprechend dem ISO/OSI-Schichtenmodell. Die genauen Parameter hängen, wie bereits erwähnt, von dem verwendeten Protokoll ab, sie betreffen Übertragungsgeschwindigkeit, verwendetes Bit-Übertragungsprotokoll, die Codierung, etc.
- Größe der Slots
   Die Länge der Slots ist von dem verwendeten Protokoll abhängig. Beispielsweise weisen die Slots im Protokoll TTP unterschiedliche Längen auf, im FlexRay-Protokoll sind die zeitgesteuerten Slots jedoch jeweils gleich lang.
- Größe der Segmente, das sind Abschnitte im Kommunikationsplan, abhängig vom jeweiligen Protokoll sowie der notwendigen "Network-Idle" Zeiten. Im TTP-Protokoll handelt es sich um die Größe des Inter Frame Gap (Wartezeit zwischen Slots), dagegen im FlexRay-Protokoll um die Größe der statischen und dynamischen Segmente sowie die Länge der Symbol-Windows und der Network Idle Time. In dem TT-CAN Protokoll geht es um die Position und Länge der Exclusiv Windows sowie der Arbitrating Windows.
- Anzahl der Kommunikationsrunden

Darüber hinaus wird es, abhängig vom konkret eingesetzten zeitgesteuerten Übertragungsprotokoll und abhängig von der konkreten Kommunikationskontroller-Hardware, weitere Parameter geben, die notwendig sind, um Kommunikation grundsätzlich zu ermöglichen, und die deshalb zu den Rasterparametern RAS auch dazugehören.

Die Rasterparameter können mit Hilfe von Tools (Hilfsprogramme oder Serviceprogramme) neu definiert oder auch von einem existierenden Cluster-Kommunikationsplan abgeleitet werden, wobei auch Mischformen möglich sind. So können von existierenden Knoten die Parameter übernommen und erweitert werden, um Cluster-Kommunikationspläne zu entwickeln, in denen diese Knoten dann mit anderen verwendet werden können.

Ein Knoten-Kommunikationsplan KPG, der von einem Raster abgeleitet wurde, besteht aus den nachstehenden Parametern:
- Verweis auf ein bestimmtes Raster RAS
   Damit gilt der Knoten-Kommunikationsplan KPG als von diesem Raster abgeleitet und sämtliche Parameter des Rasters werden implizit in den Knoten-Kommunikationsplan übernommen.
- Festlegung des/der Sendeslots des Knotens
- Vollständige Definition der gesendeten Nachrichten, d. h. Zeitpunkt, Länge, etc.
- Liste der Eingangsnachrichten des Knotens
   Die Eingangsnachrichten sind jeweils durch Slot, Position relativ zum Zyklus des Kommunikationsplanes (Runde) und durch ihre Bitposition innerhalb des Slots festzulegen.

In einen Cluster-Kommunikationsplan CP1, CP2 können Knoten-Kommunikationspläne, hier KPG, die von demselben Raster abgeleitet wurden, übernommen werden. Auch hier erfolgt die Übernahme durch Tools gestützt, um sicherzustellen, dass es bei keinerlei Nachrichtenpositionen zu Überschneidungen kommt, bzw. dass die Definition der gesendeten Nachrichten überall den Erfordernissen der übernommenen Knoten-Kommunikationspläne CP1, CP2 entspricht. Die schließlich erstellten Cluster-Kommunikationspläne CP1, CP2 bestehen aus folgenden Parametern:
- Verweis auf ein bestimmtes Raster
   Damit gilt auch der Cluster-Kommunikationsplan CP1, CP2 als von dem Raster abgeleitet und sämtliche Parameter des Rasters werden implizit in den Cluster-Kommunikationsplan übernommen.
- Anzahl der Knoten
   In diesem (End-)Stadium der Erstellung der Kommunikationspläne liegt die Knotenanzahl fest. Natürlich kann man den Kommunikationsplan jederzeit später erweitern, wenn noch freie Slots vorhanden sind.
- Zuordnung der Slots zu Sendeknoten
- Vollständige Definition aller gesendeten Nachrichten entsprechend der bereits mehrfach genannten Parameter

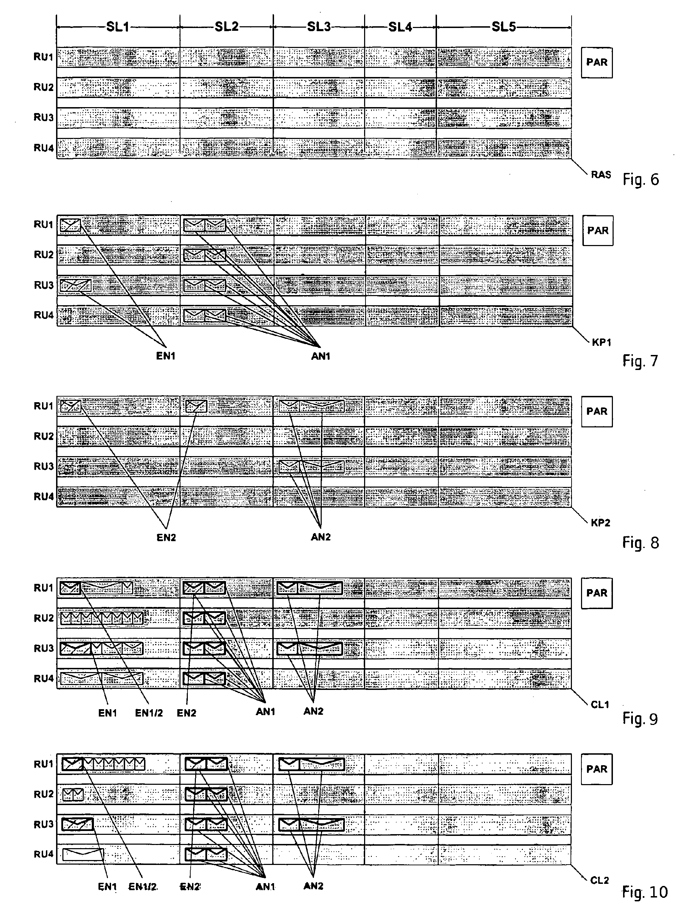

Die Darstellungen der Fig. 6 bis 10 gehen der Einfachheit halber auch von einem Cluster gemäß Fig. 1 aus, der Unterschied zu den Plänen nach Fig. 2 bis 5 liegt in der Verwendung zweier Gleichteiltypen statt eines einzigen Gleichteils.

Der Knotenrechner KR1, im Beispiel die Steuerung der Klimaanlage, belegt den Slot SL1. Zusätzlich zu der eigentlichen Klimasteuerung möge die Steuerung auch eine Steuemachricht bezüglich des Dimmens der Schaltersuchbeleuchtung übertragen, die unter anderem auch von den Knotenrechnern KR2 und KR3 gelesen werden, nämlich als Nachrichten EN1/2. Weiters möge der Knotenrechner KR1 eine Außentemperatur-Nachricht senden, die von dem Türsteuergerät, d. h. dem Knotenrechner KR2 als Nachricht EN1 empfangen und verarbeitet wird.

Die Knotenrechner KR2, im Beispiel die Türsteuerung, belegt Slot SL2, sendet Nachrichten AN1 und empfängt Nachrichten EN1.

Der Knotenrechner KR3, im Beispiel die Sitzsteuerung, belegt Slot SL3, sendet Nachrichten AN2 und empfängt Nachrichten EN2.

Der Kommunikationsplan KP1 (Fig. 7) gehört zu dem Knotenrechner KR2, der Türsteuerung, der Kommunikationsplan KP2 (Fig. 8) zu dem Knotenrechner KR3, der Sitzsteuerung; beide Kommunikationspläne KP1, KP2 sind solche von Gleichteilen, wobei der Knotenrechner KR2 einem ersten und der Knotenrechner KR3 einem zweiten Gleichteiltyp angehört.

Die Fig. 9 und 10 zeigen wiederum zwei Varianten von Clusterkommunikationsplänen CL1 bzw. CL2, wobei die unterschiedlichen Ausgabenachrichten im Slot SL1 unterschiedliche Klappen/Gebläseansteuerungen betreffen. Die Sendenachrichten der Klappensteuerung KR4 und des "Reserveknotens" KR5 sind in Slot SL4 bzw. SL5 nicht eingezeichnet, da bei diesem Beispiel nur der Empfang interessiert.

Das Beispiel zeigt somit, dass unterschiedliche Klimaanlagen - auch unterschiedliche Kommunikation am Bus - nicht zu unterschiedlichen Sitz- und Türsteuerungen führen müssen und Sitz- und Türsteuerung, d. h. die Knotenrechner KR2, KR3 als Gleichteile ausgebildet werden.

## Patentansprüche

1. Computerunterstützes Verfahren zum Erstellen von Kommunikationsplänen für ein verteiltes Echtzeit-Computersystem mit Knotenrechnern, bei welchem
In einem Schritt a) ein Raster (RAS) erstellt wird, welches sämtliche Parameter enthält, die erforderlich sind, um eine prinzipielle Kommunikation zwischen Knoten (KR1...KR5) eines Clusters (CLU) zu ermöglichen,
**dadurch gekennzeichnet dass**,
in einem Schritt b) Knoten-Kommunikationspläne (KPG; KP1, KP2) für alle als Gleichteile (KR2; KR2, KR3) geplante Knoten von dem Raster (RAS) abgeleitet und hierbei sämtliche Parameter des Rasters übernommen und knotenspezifische Parameter hinzugefügt werden und
in einem Schritt c) Cluster-Kommunikationspläne (CP1, CP2; CL1, CL2) von den Knoten-Kommunikationsplänen (KPG; KP1, KP2) abgeleitet werden, welche neben sämtlichen Parametern des Rasters und der knotenspezifischen Parameter der Gleichteile zusätzlich jene Parameter enthalten, die sich auf restliche Knoten des Clusters beziehen.

2. Verfahren nach Anspruch 1, **dadurch gekennzeichnet, dass** das Raster (RAS) aus einem bereits bestehenden Kommunikationsplan extrahiert wird.

3. Verfahren nach Anspruch 1 oder 2, **dadurch gekennzeichnet, dass** Knoten-Kommunikationspläne (KP1, KP2) für zwei oder mehr Gleichteiltypen des Clusters erstellt werden.

4. Verfahren nach einem der Ansprüche 1 bis 3, **dadurch gekennzeichnet, dass** zumindest zwei Varianten von Cluster-Kommunikationsplänen (CP1, CP2; CL1, CL2) erstellt werden.

5. Verfahren nach einem der Ansprüche 1 bis 4, **dadurch gekennzeichnet, dass** Kommunikationspläne für Cluster von Knotenrechnern in Kraftfahrzeugen erstellt werden.

6. Computerlesbarer Datenträger, enthaltend ein Computerprogramm zur Durchführung des Verfahrens nach einem der Ansprüche 1 bis 5.

## Claims

1. A computer-aided method for preparing communication schedules for a distributed real-time computer system with node computers, wherein a raster (RAS) is prepared in a step a) which contains all parameters which are required to enable a principal communication between nodes (KR1... KR5) of a cluster (CLU), **characterized in that** node communication schedules (KGP; KP1, KP2) for all nodes planned as identical parts (KR2; KR2, KR3) are derived from the raster (RAS) in a step b) and all parameters of the raster are accepted thereby and node-specific parameters are added, and cluster communication plans (CP1, CP2; CL1, CL2) are derived from node communication schedules (KGP; KP1, KP2) in a step c) which in addition to all parameters of the raster and the node-specific parameters of the identical parts contain those parameters in addition which relate to the remaining nodes of the cluster.

2. A method according to claim 1, **characterized in that** the raster (RAS) is extracted from an already existing communication schedules.

3. A method according to claim 1 or 2, **characterized in that** the node communication schedules (KGP; KP1, KP2) are prepared for two or more types of identical parts of the cluster.

4. A method according to one of the claims 1 to 3, **characterized in that** at least two variants of cluster communication schedules (CP1, CP2; CL1, CL2) are prepared.

5. A method according to one of the claims 1 to 4, **characterized in that** communication schedules are prepared for clusters of node computers in motor vehicles.

6. A computer-readable data medium, containing a computer program for performing the method according to one of the claims 1 to 5.

## Revendications

1. Procédé assisté par ordinateur pour la création de plans de communication pour un système informatique en temps réel partagé pourvu d'ordinateurs nodaux, où
lors d'une étape a), une trame (RAS) est créée, qui contient tous les paramètres nécessités pour permettre une communication de principe entre des noeuds (KR1...KR5) d'une grappe (CLU),
**caractérisé en ce que**
lors d'une étape b), des plans de communication de noeuds (KPG ; KP1, KP2) sont dérivés de la trame (RAS) pour tous les noeuds prévus en tant que parties identiques (KR2 ; KR2, KR3), tous les paramètres de la trame sont repris et des paramètres spécifiques aux noeuds sont ajoutés, et
lors d'une étape c), des plans de communication de grappes (CP1, CP2 ; CL1, CL2) sont dérivés des plans de communication de noeuds (KPG ; KP1, KP2), lesquels contiennent les paramètres qui se rapportent aux noeuds restant de la grappe, en plus de tous les paramètres de la trame et des paramètres spécifiques aux noeuds des parties identiques.

2. Procédé selon la revendication 1, **caractérisé en ce que** la trame (RAS) est extraite d'un plan de communication déjà existant.

3. Procédé selon la revendication 1 ou la revendication 2, **caractérisé en ce que** des plans de communication de noeuds (KP1, KP2) sont créés pour deux types de parties identiques de la grappe, ou plus.

4. Procédé selon l'une des revendications 1 à 3, **caractérisé en ce qu'**au moins deux variantes de plans de communication de grappes (CP1, CP2 ; CL1, CL2) sont créées.

5. Procédé selon l'une des revendications 1 à 4, **caractérisé en ce que** des plans de communication sont créés pour des grappes d'ordinateurs nodaux dans des véhicules automobiles.

6. Support de données lisible par ordinateur, contenant un programme informatique pour l'exécution du procédé selon l'une des revendications 1 à 5.
